# EUROPEAN PATENT SPECIFICATION

(11) **EP 3 037 920 B1**
(45) Date of publication and mention of the grant of the patent: **11.09.2019**
(21) Application number: 14861345.8
(22) Date of filing: 18.11.2014
(51) Int. Cl.: G10L 15/28, G06F 3/01, G06F 3/16, G06F 3/14, G10L 15/22

(54) **DISPLAY DEVICE AND CONTROL METHOD**
ANZEIGEVORRICHTUNG UND STEUERUNGSVERFAHREN
DISPOSITIF D'AFFICHAGE ET PROCÉDÉ DE COMMANDE

(30) Priority: 18.11.2013 KR 20130140097; 17.11.2014 KR 20140159967
(43) Date of publication of application: 29.06.2016
(73) Proprietor: Samsung Electronics Co., Ltd., Gyeonggi-do 16677 (KR)
(72) Inventor: KIM, Myung-jae, Suwon-si Gyeonggi-do 443-280 (KR); RYU, Hee-seob, Hwaseong-si Gyeonggi-do 445-855 (KR); HWANG, Kwang-il, Suwon-si Gyeonggi-do 443-400 (KR)
(74) Representative: Appleyard Lees IP LLP
(86) International application number: PCT/KR2014/011082
(87) International publication number: WO 2015/072816

(56) References cited:
- WO-A2-2011/028051
- KR-A- 20070 070 821
- KR-A- 20110 048 596
- US-A- 5 884 257
- US-A1- 2005 261 824
- US-A1- 2006 198 448
- US-A1- 2009 187 406
- US-A1- 2011 161 075
- US-A1- 2013 041 666
- US-A1- 2013 242 763
- US-A1- 2013 246 071
- US-B1- 6 532 446
- US-B1- 8 082 411

## Description

### [Technical Field]

The exemplary embodiments generally relate to providing a display apparatus and a control method thereof, and more particularly, to providing a display apparatus that recognizes an uttered voice of a user and a control method thereof.

### [Background Art]

In general, a display apparatus that may recognize a voice performs the following operations to provide a voice recognition result of an uttered voice of a user.

If a user command to operate the display apparatus in a voice recognition mode according to a request of the user is input, the display apparatus attempts to access a voice recognition apparatus that performs a voice recognition of the uttered voice of the user. If the display apparatus accesses the voice recognition apparatus, the display apparatus may display a user interface (UI) screen indicating that the voice recognition is possible, to allow the user to check the possibility of the voice recognition through the displayed UI screen. As described above, when the UI screen indicating the possibility of the voice recognition is activated, the display apparatus may receive the uttered voice of the user. If the uttered voice is input, the display apparatus transmits voice information about the input uttered voice to the voice recognition apparatus.

Therefore, the voice recognition apparatus may analyze the received voice information to transmit the voice recognition result of the uttered voice to the display apparatus, and the display apparatus may display text information about the uttered voice of the user on a screen based on the received voice recognition result.

When providing the voice recognition result of the uttered voice of the user through a series of processes as described above, the display apparatus accesses the voice recognition apparatus at a time when the user command to operate in the voice recognition mode is input as described above.

In other words, the display apparatus additionally requires a time for accessing the voice recognition apparatus in order to receive the uttered voice of the user. Therefore, the user is inconvenienced by a waiting period required until the display apparatus starts accessing the voice recognition apparatus and thus enters the voice recognition mode.

Examples of a display apparatus accessing a voice recognition apparatus are disclosed in US 2013/041666 A1, US 2011/161075 A1 and US 6 532 446 B1, while US 2005/261824 A1, US 2013/242763 A1 and US 8 082 411 B1 relate, inter alia, to maintaining access/connection between separate devices based on transmitting dummy data.

### [Disclosure]

### [Technical Problem]

Exemplary embodiments address at least the above problems and/or disadvantages and other disadvantages not described above. Also, the exemplary embodiments are not required to overcome the disadvantages described above, and an exemplary embodiment may not overcome any of the problems described above.

### [Technical Solution]

According to the present invention, there are provided a display apparatus, as set forth in independent claim 1, and a method of controlling a display apparatus, as set forth in independent claim 8. Preferred embodiments are defined by the dependent claims.

As previously noted, the invention is set forth in the independent claims. All following occurrences of the word "embodiment(s)", if referring to feature combinations different from those defined by the independent claims, refer to examples which were originally filed but which do not represent embodiments of the presently claimed invention; these examples are still shown for illustrative purposes only.

### [Advantageous Effects]

According to the present invention, the display apparatus minimizes a time required to enter a voice recognition mode.

### [Description of Drawings]

FIG. 1 is a flowchart illustrating providing a voice recognition result of an uttered voice of a user in a general voice recognition system;
FIG. 2 is a flowchart illustrating providing a voice recognition result of an uttered voice of a user in a voice recognition system according to an exemplary embodiment;
FIG. 3 is an exemplary view illustrating a comparison between a time required until an existing display apparatus provides a voice recognition result of an uttered voice of a user and a time required until a display apparatus according to an exemplary embodiment provides a voice recognition result of an uttered voice of a user;
FIG. 4 is a block diagram of a display apparatus that recognizes a voice, according to an exemplary embodiment;
FIG. 5 is a block diagram of a processor of a display apparatus according to an exemplary embodiment;,
FIG. 6 is a first flowchart of a method of controlling a display apparatus which may recognize a user's uttered voice according to an exemplary embodiment;
FIG. 7 is a second flowchart for maintaining an access of a display apparatus to a voice recognition apparatus according to another exemplary embodiment;
FIG. 8 is a third flowchart for maintaining a access of a display apparatus to a voice recognition apparatus according to another exemplary embodiment; and
FIG. 9 is an exemplary view of displaying text information regarding a user's uttered voice in a display apparatus according to an exemplary embodiment.

### [Mode for Invention]

Exemplary embodiments are described in greater detail with reference to the accompanying drawings.

Prior to the detailed description of the exemplary embodiments, an operation of providing a voice recognition result of an uttered voice of a user in a general voice recognition system will be described in brief.

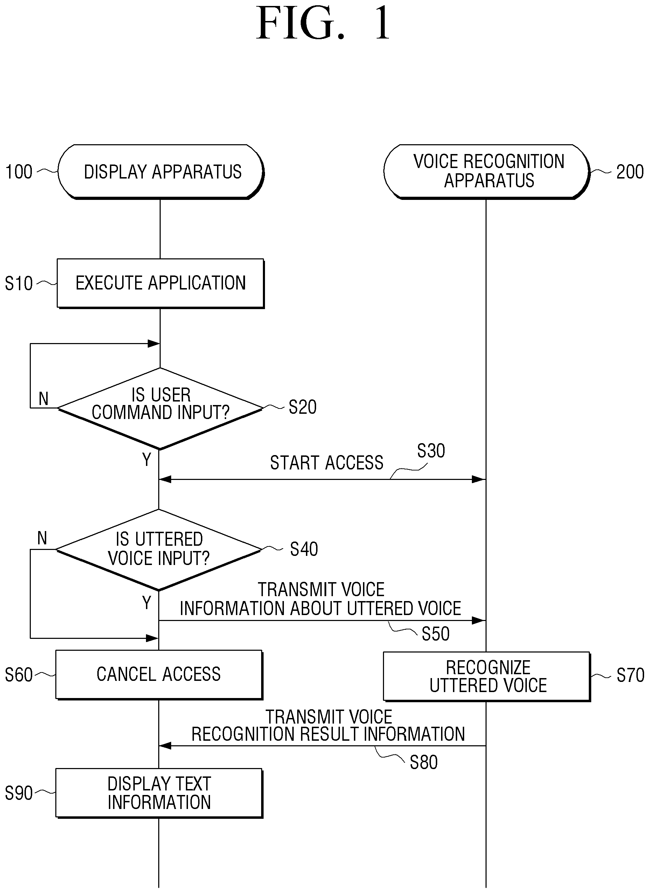

FIG. 1 is a flowchart illustrating providing a voice recognition result of an uttered voice of a user in a general voice recognition system.

As shown in FIG. 1, the general voice recognition system includes a display apparatus 100 that receives the uttered voice of the user and a voice recognition apparatus 200 recognizes the uttered voice of the user.

In detail, if the display apparatus 100 is turned on, the display apparatus 100 initializes a plurality of applications that are pre-stored in operation. Here, the plurality of applications may include a voice recognition-related application for entering a voice recognition mode. Therefore, if external power is applied to the display apparatus 100, and the display apparatus 100 is turned on, the display apparatus 100 performs a series of booting processes to initialize the plurality of applications. When initializing the plurality of applications, the display apparatus 100 initializes the voice recognition-related application of the plurality of applications in operation S10.

In operation S20, the display apparatus 100 determines whether a user command to operate in a voice recognition mode is input from the user. If it is determined in operation S20 that the user command to operate in the voice recognition mode is input from the user, the display apparatus 100 requests an access of the voice recognition apparatus 200 to start accessing the voice recognition apparatus 200 in operation S30.

After the access to the voice recognition apparatus 200 starts, the display apparatus 100 determines whether the uttered voice of the user is input within a preset threshold time in operation S40. If it is determined in operation S40 that the uttered voice of the user is input within the preset threshold time, the display apparatus 100 transmits voice information about the input uttered voice to the voice recognition apparatus 200. If it is determined in operation S40 that the uttered voice of the user is not input within the preset threshold time, the display apparatus 100 disconnects the ccess to the voice recognition apparatus 200 in operation S60. if the display apparatus 100 disconnects the access to the voice recognition apparatus 200, the display apparatus 100 does not operate in the voice recognition mode.

If the voice information about the uttered voice of the user is received from the display apparatus 100, the voice recognition apparatus 200 analyzes the received voice information and transmits voice recognition result information about the uttered voice of the user to the display apparatus 100 in operations S70 and S80. Therefore, the display apparatus 100 displays text information about the uttered voice of the user on a screen based on the voice recognition result information received from the voice recognition apparatus 200 in operation S90.

If the user command to operate in the voice recognition mode is input, the display apparatus 100 starts the access to the voice recognition apparatus 200 at step S30 and then enters the voice recognition mode in the general voice recognition system. Therefore, the user waits for a time required until the display apparatus 100 enters the voice recognition mode.

An operation of providing a voice recognition result of an uttered voice of a user in a voice recognition system according to an exemplary embodiment will now be described in brief.

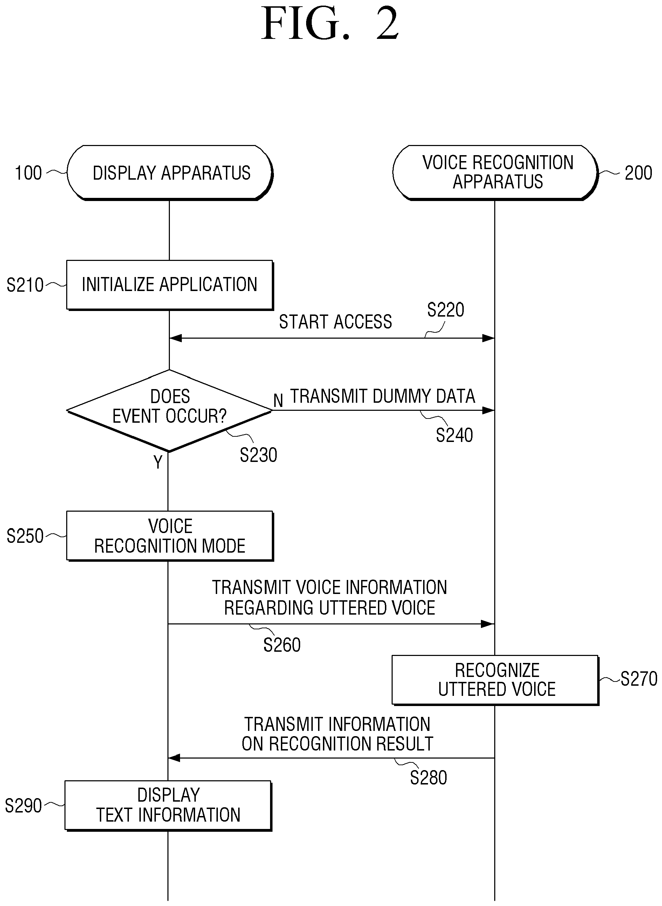

FIG. 2 is a flowchart illustrating a voice recognition result of an uttered voice of a user in a voice recognition system, according to an exemplary embodiment.

As described above with reference to FIG. 1, the voice recognition system includes a display apparatus 100 that receives an uttered voice of a user and a voice recognition apparatus 200 that recognizes the uttered voice of the user to provide a voice recognition result of the uttered voice of the user.

In detail, as shown in FIG. 2, if the display apparatus 100 is turned on, the display apparatus 100 performs a booting operation for driving an internal system of the display apparatus 100. In other words, if the display apparatus 100 is turned on, the display apparatus 100 executes a boot loader program stored in a nonvolatile memory such as a flash memory to load Kernel and then registers various types of device drivers that may operate in an operating system (OS). If the various types of device drivers are registered, the display apparatus 100 initializes applications that respectively operate to correspond to the registered device drivers in operation S210. According to an exemplary embodiment, an operation of executing an application through a booting process according to turning on of the display apparatus 100 will be described as an operation of initializing the application.

If a booting operation is completed as described above, the display apparatus 100 performs an access to the voice recognition apparatus 200 according to a preset event in operation S220. According to an exemplary embodiment, if booting is performed, and then a voice recognition-related application is completely initialized according to turning on of the display apparatus 100, the display apparatus 100 may request an access of the voice recognition apparatus 200 to perform the access to the voice recognition apparatus 200.

meanwhile, the display apparatus 100 that performs the access to the voice recognition apparatus 200 transmits access request information including identification information and address information of the display apparatus 100 to the voice recognition apparatus 200 based on a Transmission Control Protocol/Internet Protocol (TCP/IP) communication protocol in order to perform the access to the voice recognition apparatus 200. Therefore, the voice recognition apparatus 200 performs an access to the display apparatus 100 based on the access request information received from the display apparatus 100.

When the access to the voice recognition apparatus 200 starts as described above, The display apparatus 100 may enter the voice recognition mode according to whether a predetermined event occurs, and receive a user's uttered voice. In detail, If the access to the voice recognition apparatus 200 starts, the display apparatus 100 determines whether a predetermined event in relation to the operation of the voice recognition mode occurs within a first threshold time (S230). The preset the first threshold time may be a time for which the access of the display apparatus 100 to the voice recognition apparatus 200 is possible. The predetermined event in relation to the voice recognition mode may be receiving a user command to operate in the voice recognition mode, receiving motion information from a remote controller (not shown), or receiving an image regarding a motion.

Therefore, the display apparatus 100 determines whether a predetermined event occurs in relation to the voice recognition mode within the first threshold time and, if the user command is not input within the the first threshold time, transmits dummy data to the voice recognition apparatus 200 in operation S240.

Herein, the first threshold time represents the time where the voice recognition apparatus 200 is accessible, and may be 30 seconds depending on exemplary embodiments. Accordingly, if a predetermined event in relation to the voice recognition mode does not occur for 30 seconds after the access to the voice recognition apparatus 200 starts, the display apparatus 100 my transmit dummy data to the voice recognition apparatus 200.

However, the exemplary embodiment is not limited thereto, and the first threshold time may be more or less than 30 seconds according to an exemplary embodiment.

Here, the dummy data may be data having a size of about 1 Kbyte for maintaining the access of the display apparatus 100 to the voice recognition apparatus 200.

Therefore, If a predetermined event does not occur within the first threshold time, the display apparatus 100 may generate at least one dummy data and transmit the dummy data to the voice recognition apparatus 200. Thus, the access of the display apparatus 100 to the voice recognition apparatus 200 can be maintained..

Meanwhile, if a predetermined event occurs within the first threshold time, the display apparatus 100 activates the voice recognition mode for recognizing the user's uttered voice, and generates and displays on the screen a voice recognition UI informing the user that the voice recognition mode starts. If an uttered voice of the user is input when the voice recognition UI is displayed, the display apparatus 100 transmits voice information about the input uttered voice to the voice recognition apparatus 200 in operations S250 and 260. However, the present exemplary embodiments are not limited thereto, and the display apparatus 100 may receive the voice information about the uttered voice of the user through a remote control apparatus (not shown) and transmit the received voice information to the voice recognition apparatus 200.

The voice recognition apparatus 200 that receives the voice information about the uttered voice of the user analyzes the received voice information to generate voice recognition result information of the uttered voice of the user and transmits the voice recognition result information to the display apparatus 100 in operations S270 and S280. Therefore, the display apparatus 100 displays text information about the uttered voice of the user on the screen based on the voice recognition result information received from the voice recognition apparatus 200 in operation S290.

As described above, the display apparatus 100 of the voice recognition system according to an exemplary embodiment may perform the access to the voice recognition apparatus 200 before the user command to operate in the voice recognition mode is received, to reduce a time required until a voice recognition result of the uttered voice of the user is provided.

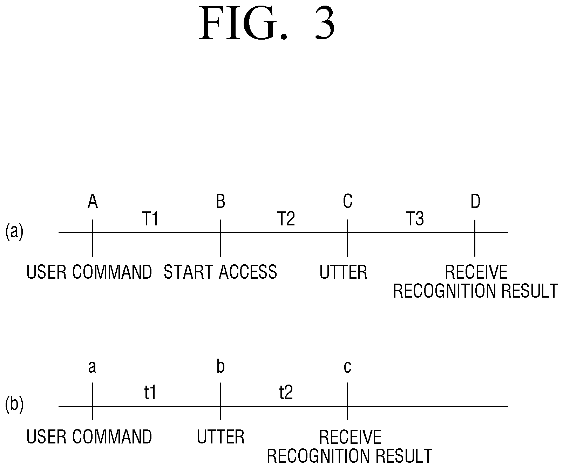

FIG. 3 is an exemplary view illustrating a comparison between a time required until an existing display apparatus provides a voice recognition result of an uttered voice of a user and a time required until a display apparatus according to an exemplary embodiment provides a voice recognition result of an uttered voice of a user.

As shown in (a) of FIG. 3, there is illustrated a time required until the display apparatus 100 of FIG. 1 receives a voice recognition result of an uttered voice of a user from the voice recognition apparatus 200. As shown in (b) of FIG. 3, there is illustrated a time required until the display apparatus 100 of the exemplary embodiment receives a voice recognition result of an uttered voice of a user from the voice recognition apparatus 200.

In detail, as shown in (a) of FIG. 3, if a user command to operate in a voice recognition mode is input, the display apparatus 100 starts an access to the voice recognition apparatus 200. Therefore, the display apparatus 100 may require time T1 to perform the access to the voice recognition apparatus 200. If the access to the voice recognition apparatus 200 is performed, the display apparatus 100 generates a voice recognition UI informing the user that the voice recognition mode starts and displays the voice recognition UI on a screen. When the voice recognition UI is displayed, the display apparatus 100 receives the uttered voice of the user. Therefore, the display apparatus 200 may require time T2 to receive the uttered voice of the user after performing the access to the voice recognition apparatus 200. If the uttered voice of the user is input, the display apparatus 100 may transmit voice information about the uttered voice of the user to the voice recognition apparatus 200 and receive a voice recognition result of the uttered voice of the user from the voice recognition apparatus 200. Therefore, the display apparatus 100 may require time T3 to receive the voice recognition result of the uttered voice of the user from the voice recognition apparatus 200.

As described above, the display apparatus 100 may require a time between about T1 and about T3 to enter the voice recognition mode and receive the voice recognition result of the uttered voice of the user.

If the display apparatus 100 according to the exemplary embodiment is turned on when the voice recognition-related application is initialized, the display apparatus 100 performs the access to the voice recognition apparatus 200 as described above with reference to FIG. 2. Therefore, as shown in (b) of FIG. 3, if a user command to operate in a voice recognition mode is input, the display apparatus 100 generates a voice recognition UI informing the user that the voice recognition mode starts and displays the voice recognition UI on a screen. When the voice recognition UI is displayed, the display apparatus 100 receives an uttered voice of a user. Therefore, after the access to the voice recognition apparatus 200 is performed, the display apparatus 100 may require time t1 to receive the uttered voice of the user. If the uttered voice of the user is input, the display apparatus 100 may transmit voice information about the received uttered voice to the voice recognition apparatus 200 and receive a voice recognition result of the uttered voice from the voice recognition apparatus 200. Therefore, the display apparatus 100 may require time t2 to receive the voice recognition result of the uttered voice of the user from the voice recognition apparatus 200.

As described above, the display apparatus 100 according to the exemplary embodiment may require time between about t1 and t2 to enter the voice recognition mode and receive the voice recognition result of the uttered voice of the user. In other words, the display apparatus 100 according to the exemplary embodiment may reduce a time required for performing the access to the voice recognition apparatus 200 according to the user command to operate in the voice recognition mode in order to more rapidly provide the voice recognition result of the uttered voice of the user than the display apparatus 100 according to the related art, as shown in FIG. 1.

Elements of the display apparatus 100 according to the exemplary embodiment concept will now be described in detail.

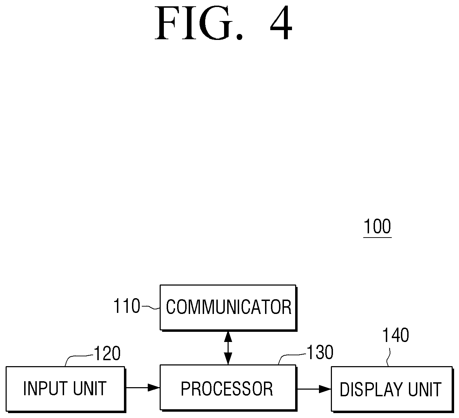

FIG. 4 is a block diagram of the display apparatus 100 that recognizes a voice, according to an exemplary embodiment of the exemplary embodiment.

As shown in FIG. 4, the display apparatus 100 may be a terminal apparatus that may perform wired and wireless communications and recognize a voice like a smartphone, a smart TV, or the like. The display apparatus 100 includes a communicator 110, an input unit 120, a processor 130, and a display unit 140.

The communicator 110 communicates with the voice recognition apparatus 200 that recognizes an uttered voice of a user. The communicator 110 may communicate with the voice recognition apparatus 200 and a web server (not shown) according to various communication methods.

According to exemplary embodiments, the communicator 110 may include various types of communication modules such as a near field communication (NFC) module (not shown), a wireless communication module (not shown), etc. Here, the NFC module is a communication module that wirelessly communicates with an external apparatus that is positioned at a short distance, for example, by Bluetooth, Zigbee, or the like. The wireless communication module is a module that is connected to an external network to perform communication according to a wireless communication protocol such as WiFi, IEEE, or the like. The wireless communication module may further include a mobile communication module that accesses a mobile communication network to perform communication according to various types of mobile communication standards such as 3rd generation (3G), 3rd generation partnership project (3GPP), long term evolution (LTE), etc.

The input unit 120 may be realized as a key pad type input panel or a touch screen type input panel including various function keys, numerical keys, special keys, letter keys, etc. In addition, the input unit 120 may receive a user's uttered voice through a microphone (not shown), or various images photographed by a camera (not shown).

The processor 130 which controls a general apparatus may control overall operation s of the display apparatus 100 using various programs and may be realized as System-On-A-Chip (SOS) or System On Chip (SOC) along with other function units. The processor 130 may be configured as below.

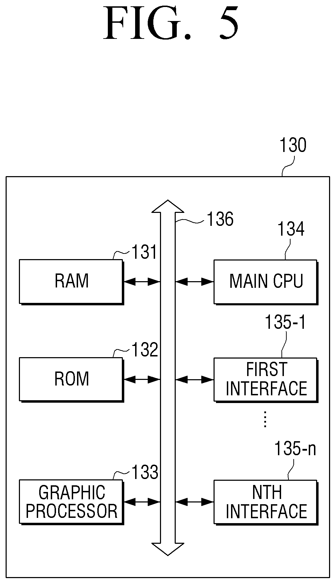

FIG. 5 is a block diagram of a processor of a display apparatus according to an exemplary embodiment.

As illustrated in FIG. 5, the processor 130 includes a RAM 131, a ROM 132, a graphic processor 133, a main CPU 134, a first to an nth interface 135-1∼135-n, and a bus 136. In this case, the RAM 131, the ROM 132, the graphic processor 133, the main CPU 134, the first to the nth interface 135-1∼135-n, etc. may be interconnected through the bus 136.

The ROM 132 stores a set of commands for system booting. If a turn-on command is input and thus, power is supplied, the main CPU 134 copies O/S stored in the storage 170 in the RAM 131 according to a command stored in the ROM 132, and boots a system by executing the O/S. When the booting is completed, the main CPU 134 copies various application programs stored in the storage 170 in the RAM 131, and executes the application programs copied in the RAM 131 to perform various operations.

The graphic processor 133 generates a screen including various objects such as a pointer, an icon, an image, a text, etc. using a computing unit (not shown) and a rendering unit (not shown). The computing unit computes property values such as coordinates, shape, size, and color of each object to be displayed according to the layout of the screen using a control command received from the input unit 120. The rendering unit generates a screen with various layouts including objects based on the property values computed by the computing unit. The screen generated by the rendering unit is displayed in a display area of the display unit 140.

The main CPU 294 accesses the storage 250, and performs booting using the O/S stored in the storage 250. The main CPU 294 performs various operations using various programs, contents, data, etc. stored in the storage 250.

The first to the nth interface 295-1∼295-n are connected to the above-described various elements. One of the above interface may be a network interface which is connected to an external apparatus via network.

If the uttered voice of the user is input through the input unit 120, the processor 130 performs signal processing with respect to the uttered voice of the user.

In detail, if an analog uttered voice of the user is input through the input unit 120, the processor 130 samples the input analog uttered voice and converts the sampled uttered voice into a digital signal. Here, the processor 130 may determine whether the uttered voice converted into the digital signal includes noise and, if the uttered voice includes the noise, remove the noise from the digital signal. If the analog uttered voice of the user is converted into the digital signal, the processor 130 transmits voice information about the signal-processed uttered voice to the voice recognition apparatus 200 through the communicator 110. Therefore, the voice recognition apparatus 200 analyzes the voice information received from the display apparatus 100 to generate voice recognition result information of the uttered voice of the user and transmits the voice recognition result information to the display apparatus 100. According to exemplary embodiments, if the voice information about the uttered voice of the user is received from the display apparatus 100, the voice recognition apparatus 200 may convert the uttered voice of the user into text information by using a speech to text (STT) algorithm. If the uttered voice of the user is converted into the text information, the voice recognition apparatus 200 transmits voice recognition result information including the text information into which the uttered voice of the user is converted, to the display apparatus 100.

Therefore, the display unit 140 may display the uttered voice of the user in a text form based on the voice recognition result information received from the voice recognition apparatus 200. The display unit 140 may be realized as a liquid crystal display (LCD), an organic light-emitting diode (OLED), a plasma display panel (PDP), or the like. In particular, if the input unit 120 is realized as a touch pad, the display unit 140 may be realized as a touch screen that forms a layer structure along with the input unit 120 that is the touch pad.

Meanwhile, when the above-described processor is turned on and various applications including an application related to voice recognition is initialized, access request information for performing an access to the voice recognition apparatus 200 is transmitted to the voice recognition apparatus 200. Therefore, the voice recognition apparatus 200 may perform an access to the display apparatus 100 based on the access request information received from the display apparatus 100.

In detail, the display apparatus 100 may receive a user command, which is to turn on the display apparatus 100, through the input unit 120 or from the remote control apparatus. If the display apparatus 100 is turned on according to the user command, the processor 130 executes a boot loader program stored in a nonvolatile memory such as a flash memory or the like to load Kernel and then registers various types of device drivers that may operate in an OS. If the various types of device drivers are registered, the processor 130 executes applications that operate to respectively correspond to the registered device drivers, to initialize the applications in order to operate in a nonvolatile memory such as a flash memory or the like.

According to exemplary embodiments, if the display apparatus 100 is a smart TV, all of applications including a voice recognition-related application may be initialized. If the display apparatus 100 is a terminal apparatus such as a smartphone and is turned on, a booting process of the display apparatus 100 may be performed, and then the voice recognition-related application may be initially set to default to be initialized.

Therefore, if at least one application including the voice recognition-related application is initialized, the processor 130 controls the communicator 110 to transmit the access request information including identification information and address information of the display apparatus 100 to the voice recognition apparatus 200. Therefore, the communicator 110 transmits the access request information to the voice recognition apparatus 200 based on a TCP/IP communication protocol method, and the voice recognition apparatus 200 performs the access to the display apparatus 100 based on the received access request information.

Therefore, if at least one application including the voice recognition-related application is initialized, the display apparatus 100 may start the access to the voice recognition apparatus 200 that provides the voice recognition result of the uttered voice of the user.

As such, when the display apparatus 100 according to an exemplary embodiment is turned on and various applications are initialized, the display apparatus 100 performs an access to the voice recognition apparatus 200, thereby reducing the time required to perform an access to the voice recognition apparatus 100 according to a user command to operate in the voice recognition mode.

Meanwhile, if an access to the voice recognition apparatus 200 starts, the processor 130 determines whether a predetermined occurs in relation to the operation of the voice recognition mode within the first threshold time.

. Here, the first threshold time may be a time when the access of the display apparatus 100 to the voice recognition apparatus 200 is possible.

Depending on exemplary embodiment, the first thesehold time may be 30 seconds. Accordingly, the processor 130 may determine whether a predetermined event occurs in relation to the operation of the voice recognition mode within 30 seconds after an access to the voice recognition apparatus 200 starts. However, the exemplary embodiment is not limited thereto, and the first threshold time may be more or less than 30 secons depending on exemplary embodiments.

The predetermined event may include at least one of a first event where a user command to operate in the voice recognition mode is input, a second event where motion information is received from a remote controller (not shown), and a third event where image regarding a user motion is input.

If it is determined that at least one of the predetermined first to third events occurs within the first threshold time, the precoessor 130 activates a voice recognition mode a user's uttered voice can be recognized. If the voice recognition is activated, the processor 130 generates a voice recognition UI informing that the voice recognition mode is activated, and the display unit 140 displays the voice recognition UI on the screen.

According to an exemplary embodiment, a user command to operate in the voice recognition mode may be received from a remote controller (not shown) through the communicator 110 or input through the input unit 120. If the first event of receiving such a user command within the first threshold time after an access to the voice recognition apparatus 200 starts occurs, the processor 130 activates the voice recognition mode where a user's uttered voice can be recognized. If the voice recognition mode is activated, the processor 130 may generate a voice recognition UI informing that the voice recognition mode is activated, and the display 130 may display the voice recognition UI on the screen.

According to another exemplary embodiment, if the second event of receiving motion information from a remote controller (not shown) within the first threshold time occurs, the processor 130 may generate a voice recognition UI informing that the voice recognition mode starts, and the display unit 140 may display the voice recognition UI on the screen. Herein, the remote controller (not shown) controls the operation of the display apparatus 100. Such a remote controller (not shown) may may include a motion sensor such as a gyro sensor and a tilt sensor, and if a motion is detected through such a motion sensor, the remote controller may transmit the detected motion information to the display apparatus 100.

Accordingly, if motion information detected by the remote controller (not shown) is received within the first threshold time after an access to the voice recognition apparatus 200 starts, the processor may activate the voice recognition mode, and display a voice recognition UI informing that the voice recognition mode is activated through the display unit 140.

According to another exemplary embodiment, if th second event of receiving motion information from a remote controller (not shown) occurs within the first threshold time, the processor 130 may analyze the received motion information and determine whether the information is consistent with pre-registered motion pattern information. If it is determined that the received motion information is consistent with the pre-registered motion pattern information, the processor 130 may activate the voice recognition mode, and display a voice recognition UI informing that the voice recognition mode is activated through the display unit 140.

According to another exemplary embodiment, if the third event where a photographed image regarding a user motion photographed through a camera (not shown) is input within the first threshold time after an access to the voice recognition apparatus 200 starts, the processor 130 compares the input photographed image with a pre-stored image. If the two images match with each other, the processor 130 may activate a voice recognition mode, and the display a voice recognition UI informing that the voice recognition mode is activated through the display unit 140.

As such, if a user's uttered voice is input through the input unit 120 while the voice recognition UI informing that the voice recognition mode is activated is displayed on the screen, the processor 130 samples the analog uttered voice of the user and converts the sampled analog uttered voice into a digital signal. Here, the processor 130 may determine whether the uttered voice converted into the digital signal includes noise and, if the uttered voice includes the noise, remove the noise from the digital signal. If the uttered voice of the user is signal-processed as the digital signal, the processor 130 transmits voice information about the signal-processed uttered voice to the voice recognition apparatus 200 through the communicator 110.

However, exemplary embodiments are not limited thereto, and the processor 130 may receive the voice information about the uttered voice of the user from the remote control apparatus through the communicator 110. In detail, the remote control apparatus may include a microphone (not shown) that receives the uttered voice of the user. Therefore, if the voice recognition UI is displayed on the screen of the display apparatus 100, the user may utter a voice through the microphone of the remote control apparatus. Also, if the uttered voice of the user is input, the remote control apparatus may perform signal-processing as described above with respect to the input uttered voice to transmit voice information about the uttered voice of the user to the display apparatus 100. Therefore, if the voice information about the uttered voice of the user is received from the remote control apparatus, the processor 130 transmits the received voice information to the voice recognition apparatus 200.

Therefore, if the voice information about the uttered voice of the user is received from the display apparatus 100, the voice recognition apparatus 200 analyzes the received voice information to generate text information about the uttered voice of the user and transmits voice recognition result information including the text information to the display apparatus 100. If the voice recognition result information is received, the display unit 140 may display the text information about the uttered voice of the user on the screen based on the voice recognition result information according to a control command of the processor 130.

Meanwhile, if a predetermined event in relation to an operation of the voice recognition mode does not occur within the first threshold time while an access to the voice recognition apparatus 200 starts, the processor 130 generates dummy data and transmits the dummy data to the voice recognition apparatus 200. Here, the dummy data may be data having a size of about 1 Kbyte for maintaining the access of the display apparatus 100 to the voice recognition apparatus 200.

Therefore, if a predetermined event in relation to an operation of the voice recognition mode does not occur within the first threshold time, the processor 130 generates at least one dummy data and transmits the dummy data to the voice recognition apparatus 200.Therefore, even if an event to operate in the voice recognition mode does not occur within the first threshold time, the display apparatus 100 may maintain the access to the voice recognition apparatus 200 continuously.

Meanwhie, if a user's uttered voice is not inpy within a predetermined second threshold time while the voice recognition mode is activated, the processor 130 may transmit dummy data for maintaining the access to the voice recognition apparatus 200. As such, even if a user's uttered voice is not input with the predetermined second threshold time after a user's uttered voice is input, the display apparatus 100 may maintain the access to the voice recognition apparatus 200 continuously by transmitting dummy data to the voice recognition apparatus 200.

Meanwhile, according to another exemplary embodiment, if a user's uttered voice is not input within the predetermined second threshold time while the voice recognition mmode is activated, the processor 130 may transmit dummy data for maintaining the access to the voice recognition apparatus 200 and inactivate the voice recognition mode.

As such, if the voice recognition mode is inactivated and at least one of the first to the third events occurs, the processor 130 may set the voice recognition mode such that its inactivated state is changed to an activated state.

Herein, the second threshold time refers to the time where the access of the display apparatus 100 to the voice recognition apparatus 200 is maintained and the voice recognition mode is an activated state and thus, in operation. Depending on exemplary embodiments, the second threshold time may be 15 seconds. Accordingly, if a user's uttered voice is not input for 15 seconds after the voice recognition mode is activated, the processor 130 may transmit dummy data for maintaining the access to the voice recognition apparatus 200 or transmit dummy data, and inactivate the voice recognition mode. However, the exemplary embodiment is not limited thereto, and the second threshold time may be more or less than 15 seconds depending on exemplary embodiments.

Meanwhile, if a user's additional uttered voice is not input within the predetermined second threshold time after a user's uttered voice is input, the processor 130 may transmit dummy data for maintaining the access to the voice recognition apparatus 200 or transmitting dummy data to the voice recognition apparatus 200, and inactivate the voice recognition mode.

According to an exemplary embodiment, the processor 130 may disconnectthe access to the voice recognition apparatus 200. According to an exemplary embodiment, if a control command to turn off the display apparatus 100 is input through the input unit 120 or a control command to turn off the display apparatus 100 is received from the remote control apparatus through the communicator 110, the processor 130 may request the remote control apparatus to disconnectthe access to the voice recognition apparatus 200 in order to disconnectthe access to the voice recognition apparatus 200.

According to another exemplary embodiment, the processor 130 may release the access to the voice recognition apparatus 200 by stopping the transmission of dummy data for maintaining the access to the voice recognition apparatus 200.

Herein, a third threshold time may be set by a user. For example, if a user sets 30 minutes as the third threshold time, and a predetermined event in relation to the voice recognition mode does not occur for 30 minutes after the access to the voice recognition apparatus 200 starts, the processor 130 may release the access to the voice recognition apparatus 200 by stopping the transmission of dummy data to the voice recognition apparatus 200.

However, the present invention is not limited thereto, and the third threshold time may be more or less than 30 minutes depending on exemplary embodiments.

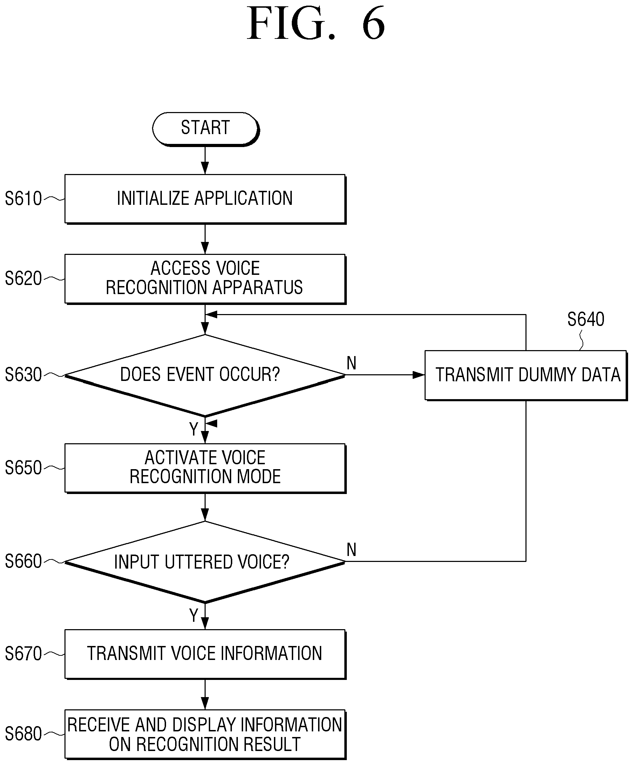

FIG. 6 is a first flowchart illustrating a method of controlling a display apparatus of recognizing an uttered voice of a user according to an exemplary embodiment.

As shown in FIG. 6, if the display apparatus 100 is turned on, the display apparatus 100 initializes an application (S610). If the application is initialized, the display apparatus 100 performs an access to the voice recognition apparatus 200 (S620).

In detail, if the display apparatus 100 is turned on, the display apparatus 100 executes a boot loader program stored in a nonvolatile memory such as a flash memory to load Kernel and then registers various types of device drivers that may operate in an OS. If the various types of device drivers are registered, the display apparatus 100 executes applications that operate to respectively correspond to the registered device drivers to initialize the applications in order to operate the applications in the nonvolatile memory such as the flash memory.

According to an exemplary embodiment, if the display apparatus 100 is a smart TV, all of applications including a voice recognition-related application may be initialized. If the display apparatus 100 is a terminal apparatus such as a smartphone and is turned on, a booting process of the display apparatus 100 may be performed, and then the voice recognition-related application may be set to default to be initialized.

If at least one application including the voice recognition-related application is initialized as described above, the display apparatus 100 transmits access request information including identification information and address information of the display apparatus 100 to the voice recognition apparatus 200 based on a TCP/IP communication protocol method. Subsequently,
if response information including identification information and address information on the voice recognition apparatus 200 is received from the voice recognition apparatus 200 which transmitted access request information, the display apparatus 100 performs an access to the voice recognition apparatus 200 based on the received response information. Accordingly, an access to the voice recognition apparatus 200 may start.

If the access to the voice recognition apparatus 200 starts, the display apparatus 100 determines whether an event preset in connection with an operation of voice recognition mode occurs within a preset first threshold time. In this case, the first threshold time refers to a duration in which an access between the display apparatus 100 and the voice recognition apparatus 200 is available, and the first threshold time may be 30 seconds according to an exemplary embodiment. Accordingly, for 30 seconds from the point of time when the access to the voice recognition apparatus 200 starts, the display apparatus 100 may determine whether a predetermined event related to the voice recognition mode occurs, but not limited thereto. That is, the first threshold time may be longer or shorter than 30 seconds.

In addition, the predetermined event may include at least one of a first event in which a user command for operating in a voice recognition mode is inputted, a second event in which motion information is received from a remote control apparatus (not shown), and a third event in which an image regarding a user motion is inputted.

If it is determined that at least one of the predetermined first to third events does not occur within the first threshold event, the display apparatus 100 generates at least one or more pieces of dummy data and transmits the generated dummy data to the voice recognition apparatus 200 (S640). In this case, the dummy data may be data of 1Kbyte for maintaining the access to the voice recognition apparatus 200.

As described above, if it is determined that the predetermined event does not occur within the first threshold event, the display apparatus 100 may generate the dummy data for maintaining the access to the voice recognition apparatus 200 and transmit the generated dummy data to the voice recognition apparatus 200 thereby continuously maintaining the access to the voice recognition apparatus 200.

Meanwhile, if at least one of the predetermined first to third events occurs within the first threshold time in operation S630, the display apparatus 100 activates the voice recognition mode for recognizing an uttered voice of a user (S650). In this case, the display apparatus 100 may generate a voice recognition user interface (UI) for notifying that the activation of the voice recognition mode and display the UI on a screen.

If the voice recognition mode is activated, the display apparatus 100 determines whether a user's uttered voice is inputted within a predetermined second threshold time (S660). In this case, the second threshold time refers to a duration in which the access to the voice recognition apparatus 200 may be maintained and the voice recognition mode may operate in an activated status. According to an exemplary embodiment, the second threshold time may be 15 seconds. Accordingly, the display apparatus 100 may determine whether the user's uttered voice is inputted for 15 second after the voice recognition mode is activated, but not limited thereto. That is, the second threshold time may be longer or shorter than 15 seconds.

If it is determined that the user's uttered voice is not inputted within the second threshold time, the display apparatus 100 generates the dummy data for maintaining the access to the voice recognition apparatus 200 through the above-described operation S640 and transmits the generated dummy data to the voice recognition apparatus 200. That is, the display apparatus 100 performs the operations in operations S630 to S660 repeatedly until the user's uttered voice is inputted within the second threshold time.

As described above, if it is determined that the user's uttered voice is not inputted within the second threshold time while the voice recognition mode is activated, the display apparatus 100 generates the dummy data for maintaining the access to the voice recognition apparatus 200 and transmits the generated dummy data to the voice recognition apparatus 200 thereby continuously maintaining the access to the voice recognition apparatus 200.

Meanwhile, if the user's uttered voice is inputted within the second threshold time in operation S660, the display apparatus 100 generates voice information on the inputted uttered voice and transmits the generated voice information to the voice recognition apparatus 200 (S670), but not limited thereto. That is, the display apparatus 100 may receive the voice information on the user's uttered voice through a remote control apparatus (not shown). If the voice information is received, the display apparatus 100 may transmit the received voice information to the voice recognition apparatus 200.

Accordingly, if the voice information on the user's uttered voice is received from the display apparatus 100, the voice recognition apparatus 200 generates text information on the user's uttered voice by analyzing the received voice information and transmits voice recognition result information including pre-generated text information to the display apparatus 100. If the voice recognition result information is received, the display apparatus 100 displays the text information on the user's uttered voice on a screen based on the received voice recognition result information (S680).

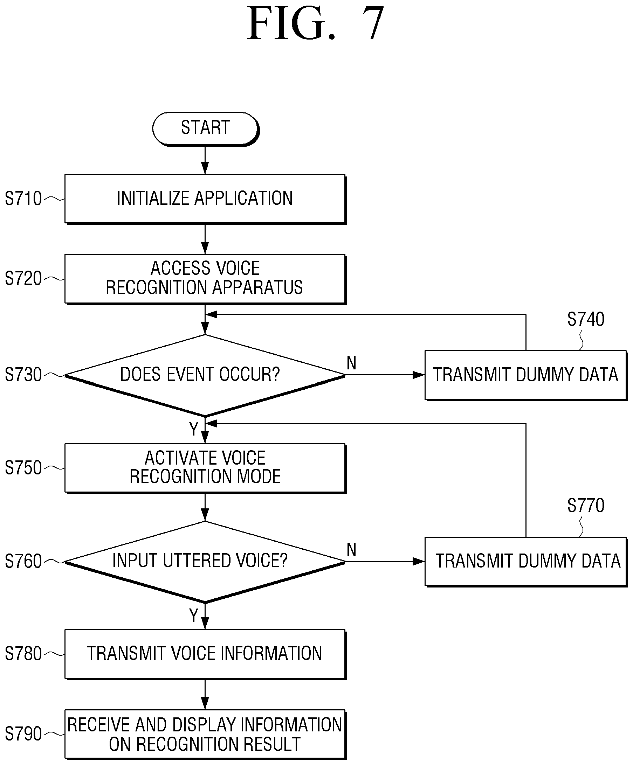

FIG. 7 is a second flowchart illustrating a method of controlling a display apparatus of recognizing a user's uttered voice according to an exemplary embodiment.

As illustrated in FIG. 7, if the display apparatus 100 is turned on, the display apparatus 100 initializes an application (S710). If the application is initialized, the display apparatus 100 performs an access to the voice recognition apparatus 200 (S720). If the access to the voice recognition apparatus 200 starts, the display apparatus 100 determines whether an event occurs in a preset first threshold time (S730).

If it is determined that an event does not occur in the first threshold time, the display apparatus 100 generates at least one or more pieces of dummy data and transmits the generated dummy data to the voice recognition apparatus 200 (S740). Meanwhile, if an event occurs in the first threshold time, the display apparatus 100 activates a voice recognition mode for recognizing a user's uttered voice (S750). If the voice recognition mode is activated, the display apparatus 100 determines whether a user's uttered voice is inputted within a preset second threshold value.

If it is determined that the user's uttered voice is not input within the second threshold time in operation S760, the display apparatus 100 generates the dummy data for maintaining the access to the voice recognition apparatus 200 and transmits the generated dummy data to the voice recognition apparatus 200 (S770). That is, the display apparatus 100 performs the operations in S750 to S770 repeatedly until the user's uttered voice is inputted for the second threshold time.

Meanwhile, if it is determined that the user's uttered voice is inputted within the second threshold time, the display apparatus 100 generates voice information on the inputted uttered voice and transmits the generated voice information to the voice recognition apparatus 200 (S780), but not limited thereto. That is, the display apparatus 100 may receive the voice information on the user's uttered voice through a remote control apparatus (not shown). If the voice information is received, the display apparatus 100 may transmit the received voice information to the voice recognition apparatus 200.

Accordingly, if the voice information on the user's uttered voice is received from the display apparatus 100, the voice recognition apparatus 200 generates text information on the user's uttered voice by analyzing the received voice information and transmits voice recognition result information including pre-generated text information to the display apparatus 100. If the voice recognition result information is received, the display apparatus 100 displays the text information on the user's uttered voice on a screen based on the received voice recognition result information (S790).

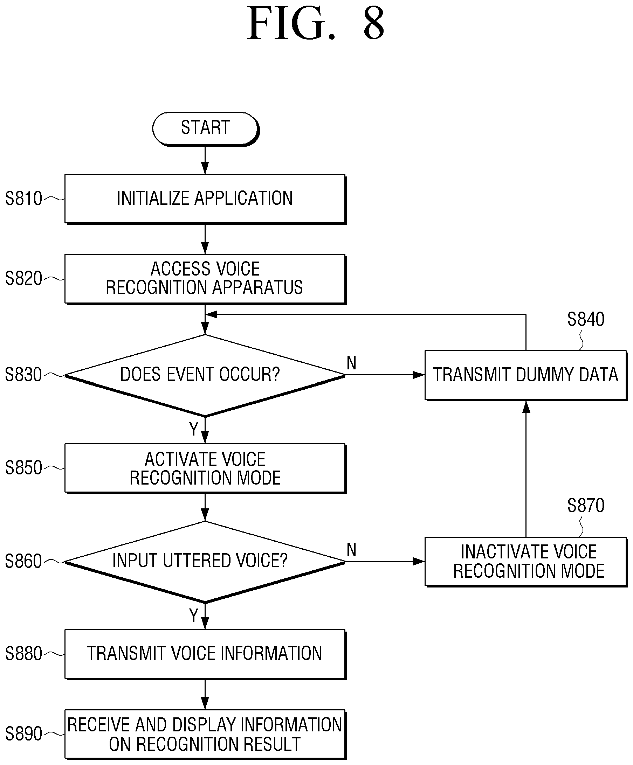

FIG. 8 is a third flowchart illustrating a method of controlling a display apparatus of recognizing a user's uttered voice according to an exemplary embodiment.

As illustrated in FIG. 8, if the display apparatus 100 is turned on, the display apparatus 100 initializes an application (S810). If the application is initialized, the display apparatus 100 performs an access to the voice recognition apparatus 200 (S820). If the access to the voice recognition apparatus 200 starts, the display apparatus 100 determines whether an event occurs within a preset first threshold time (S830).

If it is determined that any event does not occur within the first threshold time, the display apparatus 100 generates at least one or more pieces of dummy data and transmits the generated dummy data to the voice recognition apparatus 200 (S840). Meanwhile, if an event occurs in the first threshold time, the display apparatus 100 activates a voice recognition mode for recognizing a user's uttered voice (S850). If the voice recognition mode is activated, the display apparatus 100 determines whether a user's uttered voice is inputted within a preset second threshold time (S860).

If it is determined that the user's uttered voice is not inputted within the second threshold time in operation S860, the display apparatus 100 inactivates the activated voice recognition mode (S870). If the voice recognition mode is inactivated, the display apparatus 100 generates the dummy data for maintaining the access to the voice recognition apparatus 200 through the above-described operation S840 and transmits the generated dummy data to the voice recognition apparatus 200, but not limited thereto. That is, if the user's uttered voice is not inputted within the second threshold time, the display apparatus 100 may generate the dummy data for maintaining the access to the voice recognition apparatus 200, transmit the generated dummy data to the voice recognition apparatus 200, and inactivate the activated voice recognition mode.

As described above, if the voice recognition mode is inactivated, the display apparatus 100 resets the inactivated voice recognition mode to be activated through the operations in S830 to S860 according to whether a predetermined event occurs within the first threshold time. If the voice recognition is activated, the display apparatus 100 re-performs an operation as to whether the user's uttered voice is inputted within the second threshold time.

Meanwhile, if it is determined that the user's uttered voice is inputted within the second threshold time in S860, the display apparatus 100 generates voice information on the inputted uttered voice and transmits the generated voice information to the voice recognition apparatus 200 (S880), but not limited thereto. That is, the display apparatus 100 may receive the voice information on the user's uttered voice through the remote control apparatus (not shown). If the voice information is received, the display apparatus 100 may transmit the received voice information to the voice recognition apparatus 200.

Accordingly, if the voice information on the user's uttered voice is received from the display apparatus 100, the voice recognition apparatus 200 generates text information on the user's uttered voice by analyzing the received voice information and transmit voice recognition result information including pre-generated text information to the display apparatus 100. If the voice recognition result information is received, the display apparatus 100 displays the text information on the user's uttered voice on a screen based on the received voice recognition result information (S890).

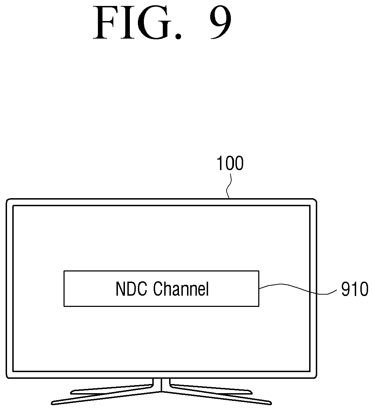

FIG. 9 is a demonstration diagram provided to describe an example of displaying text information on a user's uttered voice in a display apparatus according to an exemplary embodiment.

As illustrated in FIG. 9, for example, a user is able to perform an utterance for changing a channel from a currently-viewed channel to an "NDC" channel. That is, the user is able to perform an utterance "NDC channel." If the uttered voice is inputted, the display apparatus 100 transmits the uttered voice to the voice recognition apparatus 200. The voice recognition apparatus 200 analyzes the uttered voice received from the display apparatus 100, generates text information on the user's uttered voice, and transmits the generated text information to the display apparatus 100. Accordingly, the display apparatus 100 may display text information 910 "NDC channel" on a screen.

As described above, the display apparatus 100 which displays the voice recognition result information on the user's uttered voice disconnects the access to the voice recognition apparatus 200 according to the following exemplary embodiment.

According to an exemplary embodiment, if a control command to turn off the display apparatus 100 is input according to a request of the user or an event is received from the remote control apparatus, the display apparatus 100 may request the voice recognition apparatus 200 to disconnect the access to the voice recognition apparatus 200 in order to disconnect the access to the voice recognition apparatus 200.

According to another exemplary embodiment, if the dummy data for maintaining the access to the voice recognition apparatus 200 are continuously transmitted for a predetermined fourth threshold time, the display apparatus 100 may stop the transmission of the dummy data thereby disconnecting the access to the voice recognition apparatus 200. In this case, the fourth threshold time may be a duration set by a user. For example, if a user sets a time to be 30 minutes, the display apparatus 100 determines whether a transmission time of the dummy data which are continuously transmitted to the voice recognition apparatus 200 exceeds 30 minutes. If it is determined that the continued transmission time of the dummy data exceeds 30 minutes, the display apparatus 100 may stop the transmission of the dummy data to the voice recognition apparatus 200 thereby disconnecting the access to the voice recognition apparatus 200.

However, the above exemplary embodiment is not limited thereto. That is, the fourth threshold time may be longer or shorter than 30 minutes.

In addition, the above-described method of controlling a display apparatus may be implemented as at least one execution program for performing the method, and the execution program may be stored in a non-transitory computer readable recording medium.The non-transitory computer readable recording medium refers to a medium which may store data permanently or semi-permanently rather than storing data for a short time such as a register, a cache, and a memory and may be readable by an apparatus. As an example, the above-described various applications and programs may be stored in the non- transitory computer readable recording medium such as a compact disc (CD), a digital versatile disk (DVD), a hard disk, a Blu-ray disk, a universal serial bus (USB), a memory card, a read-only memory (ROM), and the like, and provided therein.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a communicator configured to communicate with a voice recognition apparatus;
an input unit configured to receive an uttered voice of a user;
a display; and
a processor configured to, based on the display apparatus being turned on, control the communicator to transmit connection request information to the voice recognition apparatus for connecting with the voice recognition apparatus which is configured to perform a voice recognition of the uttered voice of the user,
based on a predetermined event occurring within a first threshold time while a connection with the voice recognition apparatus is maintained, activate a voice recognition mode for recognizing the uttered voice of the user,
based on the predetermined event not occurring within the first threshold time while the connection with the voice recognition apparatus is maintained, control the communicator to transmit a dummy data to the voice recognition apparatus for maintaining the connection with the voice recognition apparatus,
based on the uttered voice being inputted through the input unit within a second threshold time while the voice recognition mode is activated, control the communicator to transmit voice information regarding the uttered voice to the voice recognition apparatus,
based on the uttered voice of the user not being inputted within the second threshold time while the voice recognition mode is activated, control the communicator to transmit a dummy data to the voice recognition apparatus for maintaining the connection , and
based on voice recognition result information about the uttered voice of the user being received from the voice recognition apparatus, control the display to display a result screen corresponding to the voice recognition result information.

2. The display apparatus of claim 1, wherein in response to the display apparatus being turned on and a voice recognition-related application being initialized, the processor is configured to control the communicator to transmit connection request information to the voice recognition apparatus for connecting with the voice recognition apparatus.

3. The display apparatus of claim 1,
wherein the predetermined event comprises at least one of a first event in which a user command for operating in a voice recognition mode is received, a second event in which motion information is received from a remote control apparatus, and a third event in which an image regarding a motion of the user is inputted.

4. The display apparatus of claim 3, wherein in response to at least one event among the first to third events not occurring within the first threshold time, the processor is configured to control the communicator to transmit dummy data for maintaining the connection to the voice recognition apparatus.

5. The display apparatus of claim 1, wherein in response to the uttered voice of the user being not inputted within the second threshold time while the voice recognition mode is activated, the processor is configured to inactivate the voice recognition mode.

6. The display apparatus of claim 1, wherein the second threshold time is a duration in which the connection to the voice recognition apparatus is maintained and the voice recognition mode operates in an activated mode, and
wherein the first threshold time is a duration in which the connection to the voice recognition apparatus is maintained.

7. The display apparatus of claim 1, wherein in response to a control command to turn off the display apparatus being input, the processor is configured to disconnect the connection to the voice recognition apparatus.

8. A method of controlling a display apparatus, the method comprising:
based on the display apparatus being turned on, transmitting connection request information to a voice recognition apparatus for connecting with the voice recognition apparatus which performs a voice recognition of an uttered voice of the user;
based on a predetermined event occurring within a first threshold time while a connection with the voice recognition apparatus is maintained, activating a voice recognition mode for recognizing the uttered voice of a user,
based on the predetermined event not occurring within the first threshold time while the connection with the voice recognition apparatus is maintained, transmitting a dummy data to the voice recognition apparatus for maintaining the connection with the voice recognition apparatus,
based on the uttered voice of the user being input to an input unit within a second threshold time while the voice recognition mode is activated, transmitting voice information regarding the uttered voice to the voice recognition apparatus;
based on the uttered voice of the user not being input within the second threshold time while the voice recognition mode is activated, transmitting a dummy data to the voice recognition apparatus for maintaining the connection, and
based on voice recognition result information about the uttered voice of the user being received from the voice recognition apparatus, displaying a result screen corresponding to the voice recognition result information.

9. The method of claim 8, wherein in response to the display apparatus being turned on and a voice recognition-related application being initialized, connecting to the voice recognition apparatus.

10. The method of claim 8,
wherein the predetermined event comprises at least one of a first event in which a user command for operating in a voice recognition mode is received, a second event in which motion information is received from a remote control apparatus, and a third event in which an image regarding a motion of the user is inputted.

11. The method of claim 10, wherein in response to at least one event among the first to third events not occurring within the first threshold time, transmitting dummy data for maintaining the connection to the voice recognition apparatus.

12. The method of claim 8, further comprising:
inactivating the voice recognition mode in response to the uttered voice of the user not being inputted within the second threshold time while the voice recognition mode is activated.

13. The method of claim 8, where in the second threshold time is a duration in which the connection to the voice recognition apparatus is maintained and the voice recognition mode operates in an activated mode, and
wherein the first threshold time is a duration in which the connection to the voice recognition apparatus is maintained.

## Patentansprüche

1. Anzeigevorrichtung, umfassend:
Kommunikationseinheit, die dafür ausgelegt ist, mit einer Spracherkennungsvorrichtung zu kommunizieren;
Eingabeeinheit, die dafür ausgelegt ist, eine Sprachäußerung eines Benutzers zu empfangen;
Anzeige; und
Prozessor, der dafür ausgelegt ist, basierend auf dem Einschalten der Anzeigevorrichtung die Kommunikationseinheit zum Übertragen von Verbindungsanforderungsinformationen an die Spracherkennungsvorrichtung zum Verbinden mit der Spracherkennungsvorrichtung zu steuern, die dafür ausgelegt ist, eine Spracherkennung der Sprachäußerung des Benutzers durchzuführen,
basierend darauf, dass ein vorbestimmtes Ereignis innerhalb einer ersten Schwellenzeit eintritt, während eine Verbindung mit der Spracherkennungsvorrichtung aufrechterhalten wird, Aktivieren eines Spracherkennungsmodus zum Erkennen der Sprachäußerung des Benutzers,
basierend darauf, dass das vorbestimmte Ereignis nicht innerhalb der ersten Schwellenzeit eintritt, während die Verbindung mit der Spracherkennungsvorrichtung aufrechterhalten wird, Steuern der Kommunikationseinheit zum Übertragen von Dummy-Daten an die Spracherkennungsvorrichtung, um die Verbindung mit der Spracherkennungsvorrichtung aufrechtzuerhalten,
basierend darauf, dass die Sprachäußerung innerhalb einer zweiten Schwellenzeit durch die Eingabeeinheit eingegeben wird, während der Spracherkennungsmodus aktiviert ist, Steuern der Kommunikationseinheit zum Übertragen von Sprachinformationen in Bezug auf die Sprachäußerung an die Spracherkennungsvorrichtung,
basierend darauf, dass die Sprachäußerung des Benutzers nicht innerhalb der zweiten Schwellenzeit eingegeben wird, während der Spracherkennungsmodus aktiviert ist, Steuern der Kommunikationseinheit zum Übertragen von Dummy-Daten an die Spracherkennungsvorrichtung, um die Verbindung aufrechtzuerhalten, und
basierend auf Spracherkennungsergebnisinformationen über die Sprachäußerung des Benutzers, die von der Spracherkennungsvorrichtung empfangen werden, Steuern der Anzeige zum Anzeigen eines Ergebnisbildschirms, der den Spracherkennungsergebnisinformationen entspricht.

2. Anzeigevorrichtung nach Anspruch 1, wobei der Prozessor als Reaktion auf das Einschalten der Anzeigevorrichtung und das Initialisieren einer spracherkennungsbezogenen Anwendung dafür ausgelegt ist, die Kommunikationseinheit zum Übertragen von Verbindungsanforderungsinformationen an die Spracherkennungsvorrichtung zum Verbinden mit der Spracherkennungsvorrichtung zu steuern.

3. Anzeigevorrichtung nach Anspruch 1, wobei das vorbestimmte Ereignis mindestens eines von einem ersten Ereignis umfasst, bei dem ein Benutzerbefehl für das Betreiben in einem Spracherkennungsmodus empfangen wird, einem zweiten Ereignis, bei dem Bewegungsinformationen von einer Fernsteuerungsvorrichtung empfangen werden, und einem dritten Ereignis, bei dem ein Bild bezüglich einer Bewegung des Benutzers eingegeben wird.

4. Anzeigevorrichtung nach Anspruch 3, wobei als Reaktion auf mindestens ein Ereignis vom ersten bis dritten Ereignis, das nicht innerhalb der ersten Schwellenzeit eintritt, der Prozessor dafür ausgelegt ist, die Kommunikationseinheit zum Übertragen von Dummy-Daten zu steuern, um den Verbindungszugriff zur Spracherkennungsvorrichtung aufrechtzuerhalten.

5. Anzeigevorrichtung nach Anspruch 1, wobei als Reaktion darauf, dass die Sprachäußerung des Benutzers nicht innerhalb der zweiten Schwellenzeit eingegeben wird, während der Spracherkennungsmodus aktiviert ist, der Prozessor dafür ausgelegt ist, den Spracherkennungsmodus zu deaktivieren.

6. Anzeigevorrichtung nach Anspruch 1, wobei die zweite Schwellenzeit eine Dauer ist, in der die Verbindung zur Spracherkennungsvorrichtung aufrechterhalten wird und der Spracherkennungsmodus in einem aktivierten Modus betrieben wird, und
wobei die erste Schwellenzeit eine Dauer ist, in der die Verbindung zur Spracherkennungsvorrichtung aufrechterhalten wird.

7. Anzeigevorrichtung nach Anspruch 1, wobei als Reaktion darauf, dass ein Steuerbefehl zum Ausschalten der Anzeigevorrichtung eingegeben wird, der Prozessor dafür ausgelegt ist, die Verbindung zur Spracherkennungsvorrichtung zu trennen.

8. Verfahren zum Steuern einer Anzeigevorrichtung, wobei das Verfahren Folgendes umfasst:
basierend auf dem Einschalten der Anzeigevorrichtung, Übertragen von Verbindungsanforderungsinformationen an eine Spracherkennungsvorrichtung zum Verbinden mit der Spracherkennungsvorrichtung, die eine Spracherkennung einer Sprachäußerung des Benutzers durchführt;
basierend darauf, dass ein vorbestimmtes Ereignis innerhalb einer ersten Schwellenzeit eintritt, während eine Verbindung mit der Spracherkennungsvorrichtung aufrechterhalten wird, Aktivieren eines Spracherkennungsmodus zum Erkennen der Sprachäußerung eines Benutzers,
basierend darauf, dass das vorbestimmte Ereignis nicht innerhalb der ersten Schwellenzeit eintritt, während die Verbindung mit der Spracherkennungsvorrichtung aufrechterhalten wird, Übertragen von Dummy-Daten an die Spracherkennungsvorrichtung, um die Verbindung mit der Spracherkennungsvorrichtung aufrechtzuerhalten,
basierend darauf, dass die Sprachäußerung des Benutzers innerhalb einer zweiten Schwellenzeit in eine Eingabeeinheit eingegeben wird, während der Spracherkennungsmodus aktiviert ist, Übertragen von Sprachinformationen bezüglich der Sprachäußerung an die Spracherkennungsvorrichtung;
basierend darauf, dass die Sprachäußerung des Benutzers nicht innerhalb der zweiten Schwellenzeit eingegeben wird, während der Spracherkennungsmodus aktiviert ist, Übertragen von Dummy-Daten an die Spracherkennungsvorrichtung, um die Verbindung aufrechtzuerhalten, und
basierend auf Spracherkennungsergebnisinformationen über die Sprachäußerung des Benutzers, die von der Spracherkennungsvorrichtung empfangen werden, Anzeigen eines Ergebnisbildschirms, der den Spracherkennungsergebnisinformationen entspricht.

9. Verfahren nach Anspruch 8, wobei als Reaktion auf das Einschalten der Anzeigevorrichtung und das Initialisieren einer spracherkennungsbezogenen Anwendung das Verbinden mit der Spracherkennungsvorrichtung erfolgt.

10. Verfahren nach Anspruch 8,
wobei das vorbestimmte Ereignis mindestens eines von einem ersten Ereignis umfasst, bei dem ein Benutzerbefehl zum Betreiben in einem Spracherkennungsmodus empfangen wird, einem zweiten Ereignis, bei dem Bewegungsinformationen von einer Fernsteuerungsvorrichtung empfangen werden, und einem dritten Ereignis, bei dem ein Bild bezüglich einer Bewegung des Benutzers eingegeben wird.

11. Verfahren nach Anspruch 10, wobei als Reaktion auf mindestens ein Ereignis vom ersten bis dritten Ereignis, das nicht innerhalb der ersten Schwellenzeit eintritt, das Übertragen von Dummy-Daten zum Aufrechterhalten der Verbindung zur Spracherkennungsvorrichtung erfolgt.

12. Verfahren nach Anspruch 8, ferner umfassend:
Deaktivieren des Spracherkennungsmodus als Reaktion darauf, dass die Sprachäußerung des Benutzers nicht innerhalb der zweiten Schwellenzeit eingegeben wird, während der Spracherkennungsmodus aktiviert ist.

13. Verfahren nach Anspruch 8, wobei die zweite Schwellenzeit eine Dauer ist, in der die Verbindung zur Spracherkennungsvorrichtung aufrechterhalten wird und der Spracherkennungsmodus in einem aktivierten Modus betrieben wird, und
wobei die erste Schwellenzeit eine Dauer ist, in der die Verbindung zur Spracherkennungsvorrichtung aufrechterhalten wird.

## Revendications

1. Appareil d'affichage, comprenant :
un dispositif de communication configuré pour communiquer avec un appareil de reconnaissance vocale ;
une unité d'entrée configurée pour recevoir une voix énoncée d'un utilisateur ;
un affichage ; et
un processeur configuré, sur la base du fait que l'appareil d'affichage est mis sous tension, pour commander au dispositif de communication de transmettre des informations de demande de connexion à l'appareil de reconnaissance vocale pour se connecter à l'appareil de reconnaissance vocale qui est configuré pour effectuer une reconnaissance vocale de la voix énoncée de l'utilisateur,
sur la base du fait qu'un événement prédéterminé survient dans un premier délai seuil pendant qu'une connexion à l'appareil de reconnaissance vocale est maintenue, pour activer un mode de reconnaissance vocale pour reconnaître la voix énoncée de l'utilisateur,
sur la base du fait que l'événement prédéterminé ne survient pas dans le premier délai seuil pendant que la connexion à l'appareil de reconnaissance vocale est maintenue, pour commander au dispositif de communication de transmettre des données fictives à l'appareil de reconnaissance vocale pour maintenir la connexion à l'appareil de reconnaissance vocale,
sur la base du fait que la voix énoncée est entrée à travers l'unité d'entrée dans un deuxième délai seuil pendant que le mode de reconnaissance vocale est activé, pour commander au dispositif de communication de transmettre des informations vocales concernant la voix énoncée à l'appareil de reconnaissance vocale,
sur la base du fait que la voix énoncée de l'utilisateur n'est pas entrée dans le deuxième délai seuil pendant que le mode de reconnaissance vocale est activé, pour commander au dispositif de communication de transmettre des données fictives à l'appareil de reconnaissance vocale pour maintenir la connexion, et
sur la base du fait que des informations de résultat de reconnaissance vocale concernant la voix énoncée de l'utilisateur sont reçues de l'appareil de reconnaissance vocale, pour commander à l'affichage d'afficher un écran de résultat correspondant aux informations de résultat de reconnaissance vocale.

2. Appareil d'affichage selon la revendication 1, dans lequel, en réponse au fait que l'appareil d'affichage est mis sous tension et qu'une application concernant la reconnaissance vocale est lancée, le processeur est configuré pour commander au dispositif de communication de transmettre des informations de demande de connexion à l'appareil de reconnaissance vocale pour se connecter à l'appareil de reconnaissance vocale.

3. Appareil d'affichage selon la revendication 1, dans lequel l'événement prédéterminé comprend au moins l'un d'un premier événement dans lequel un ordre d'utilisateur pour fonctionner dans un mode de reconnaissance vocale est reçu, d'un deuxième événement dans lequel des informations de mouvement sont reçues d'un appareil de télécommande, et d'un troisième événement dans lequel une image concernant un mouvement de l'utilisateur est entrée.

4. Appareil d'affichage selon la revendication 3, dans lequel, en réponse au fait qu'au moins un événement parmi les premier à troisième événements ne survient pas dans le premier délai seuil, le processeur est configuré pour commander au dispositif de communication de transmettre des données fictives pour maintenir la connexion à l'appareil de reconnaissance vocale.

5. Appareil d'affichage selon la revendication 1, dans lequel, en réponse au fait que la voix énoncée de l'utilisateur n'est pas entrée dans le deuxième délai seuil pendant que le mode de reconnaissance vocale est activé, le processeur est configuré pour désactiver le mode de reconnaissance vocale.

6. Appareil d'affichage selon la revendication 1, dans lequel le deuxième délai seuil est une durée pendant laquelle la connexion à l'appareil de reconnaissance vocale est maintenue et le mode de reconnaissance vocale fonctionne dans un mode activé, et dans lequel le premier délai seuil est une durée pendant laquelle la connexion à l'appareil de reconnaissance vocale est maintenue.

7. Appareil d'affichage selon la revendication 1, dans lequel, en réponse au fait qu'un ordre de commande de mettre l'appareil d'affichage hors tension est entré, le processeur est configuré pour déconnecter la connexion à l'appareil de reconnaissance vocale.

8. Procédé de commande d'un appareil d'affichage, le procédé comprenant :
sur la base du fait que l'appareil d'affichage est mis sous tension, la transmission d'informations de demande de connexion à un appareil de reconnaissance vocale pour se connecter à l'appareil de reconnaissance vocale qui effectue une reconnaissance vocale d'une voix énoncée de l'utilisateur ;
sur la base du fait qu'un événement prédéterminé survient dans un premier délai seuil pendant qu'une connexion à l'appareil de reconnaissance vocale est maintenue, l'activation d'un mode de reconnaissance vocale pour reconnaître la voix énoncée d'un utilisateur,
sur la base du fait que l'événement prédéterminé ne survient pas dans le premier délai seuil pendant que la connexion à l'appareil de reconnaissance vocale est maintenue, la transmission de données fictives à l'appareil de reconnaissance vocale pour maintenir la connexion à l'appareil de reconnaissance vocale,
sur la base du fait que la voix énoncée de l'utilisateur est entrée dans une unité d'entrée dans un deuxième délai seuil pendant que le mode de reconnaissance vocale est activé, la transmission d'informations vocales concernant la voix énoncée à l'appareil de reconnaissance vocale ;
sur la base du fait que la voix énoncée de l'utilisateur n'est pas entrée dans le deuxième délai seuil pendant que le mode de reconnaissance vocale est activé, la transmission de données fictives à l'appareil de reconnaissance vocale pour maintenir la connexion, et
sur la base du fait que des informations de résultat de reconnaissance vocale concernant la voix énoncée de l'utilisateur sont reçues de l'appareil de reconnaissance vocale, l'affichage d'un écran de résultat correspondant aux informations de résultat de reconnaissance vocale.

9. Procédé selon la revendication 8, dans lequel, en réponse au fait que l'appareil d'affichage est mis sous tension et qu'une application concernant la reconnaissance vocale est lancée, la connexion à l'appareil de reconnaissance vocale est effectuée.

10. Procédé selon la revendication 8, dans lequel l'événement prédéterminé comprend au moins l'un d'un premier événement dans lequel un ordre d'utilisateur pour fonctionner dans un mode de reconnaissance vocale est reçu, d'un deuxième événement dans lequel des informations de mouvement sont reçues d'un appareil de télécommande, et d'un troisième événement dans lequel une image concernant un mouvement de l'utilisateur est entrée.

11. Procédé selon la revendication 10, dans lequel, en réponse au fait qu'au moins un événement parmi les premier à troisième événements ne survient pas dans le premier délai seuil, la transmission de données fictives pour maintenir la connexion à l'appareil de reconnaissance vocale est effectuée.

12. Procédé selon la revendication 8, comprenant en outre :
la désactivation du mode de reconnaissance vocale en réponse au fait que la voix énoncée de l'utilisateur n'est pas entrée dans le deuxième délai seuil pendant que le mode de reconnaissance vocale est activé.

13. Procédé selon la revendication 8, dans lequel le deuxième délai seuil est une durée pendant laquelle la connexion à l'appareil de reconnaissance vocale est maintenue et le mode de reconnaissance vocale fonctionne dans un mode activé, et dans lequel le premier délai seuil est une durée pendant laquelle la connexion à l'appareil de reconnaissance vocale est maintenue.
